Europäisches Patentamt

(19) European Patent Office

Office européen des brevets

(11) Publication number: **0 438 356 A1**

## EUROPEAN PATENT APPLICATION

(21) Application number: **91400101.1**

(22) Date of filing: **17.01.91**

(51) Int. Cl.$^5$: **C05G 5/00, A01C 21/00**

(30) Priority: **17.01.90 IL 93077**

(43) Date of publication of application:
**24.07.91 Bulletin 91/30**

(84) Designated Contracting States:
**AT BE CH DE DK ES FR GB GR IT LI LU NL SE**

(71) Applicant: **Technion Research & Development Foundation Ltd.**
**Technion City**
**IL-32000 Haifa (IL)**

(72) Inventor: **Zaslavsky, Dan**
**22, Nehemia St.**
**Haifa (IL)**
Inventor: **Shaviv, Abraham**
**20, Cabirim St.**
**Haifa (IL)**

(74) Representative: **Portal, Gérard et al**
**Cabinet Beau de Loménie 55, rue d'Amsterdam**
**F-75008 Paris (FR)**

(54) Device for a controlled release of fertilizers.

(57) A device for the release of fertilizers to a humid soil comprises a dry mixture of materials with at least one soluble component and a thickener, in part enclosed by a water impermeable membrane and in part by stagnation zones. The combination of said membrane and stagnation zones are generating an enclosure with one opening which allows the water flow into the enclosure. The area of said opening should not exceed one fifth of the cross-section of the enclosure. According to a most preferred embodiment, the device possesses at least one package-like configuration with a plurality of openings. The package-like configuration is divided to individual enclosures, each enclosure possessing one opening, the enclosure being delimited by said impermeable membranes and stagnation zones. The device enables to release the fertilizers in a controlled and prolonged way. The device can be either prefabricated or produced in-situ at-site.

EP 0 438 356 A1

# DEVICE FOR A CONTROLLED RELEASE OF FERTILIZERS

The present invention relates to a method and a device for a prolonged release of soluble chemicals to soil. More particularly the invention relates to a method and a device which are combining the geometry of the device, the composition inside the device and the manufacturing thereof.

## BACKGROUND OF THE INVENTION

The use of fertilizers in the form of soluble chemicals for supplying the requirements of soil for growth of plants is well-known. However, a large part of the fertilizer which is placed directly into the soil or in water which is then infiltrated into the soil, is removed by leaching or otherwise becomes unavailable to the plants through fixation of some kind or through decomposition (e.g. denitrification). The part which is removed by leaching constitutes not only an economical loss but also an environmental burden. Futhermore, excess fertilizer in the soil can even cause stress to the plants. Such stress is evident when a large quantity of fertilizer is placed within the soil, intended for a long period. In such a case the plants may literally suffer from excess, shortly after the placement of the fertilizer and lack nutrition at later times. These problems were well known and dealt with by a large number of researches as evidenced from the large number of patents and reviews.

An early approach to overcome this discrepancy with respect to the fertilization, mainly by nitrogen, was suggested wherein organic compounds of the urea-formaldehyde type were used. The nitrogen present therein is gradually released and becomes soluble due to the low solubility of these compounds. This approach, while having a number of advantages has two main drawbacks. First, the fertilizer still has a rate of release which is too large for most uses, and second it does not provide a method for a slow release of other chemicals which should be preferably coplaced with the nitrogen source. As will be explained in the following, the co-placement of several soluble fertilizers can have a positive synergistic effect for a maximum benefit to the plants. The present invention is intended to mend the above two disadvantages.

Another approach was to provide small amounts of fertilizers or other solubles periodically at small intervals, supplying each time only a limited quantity that is expected to be utilized, before it becomes unavailable by one of the processes. At no time is there any large excess formed to damage the plants. This method is impractical without a fixed irrigation system that can distribute the dissolved chemicals onto the soil and would provide the carrier to infiltrate the chemicals into the soil. This process has been given a name of "fertigation". It has an inherited advantage of not only metering accurately the fertilizer, substantially as the irrigation, but making the fertilizer available when moisture is available. Today fertigation is considered the best of fertilizer application. Still, there are some serious reservations concerning this method.

The main limitation of fertigation is that the vast majority of cultivated lands do not have the necessary sophisticated irrigation system to fit the requirements of fertigation. Another limitation is in plant nurseries where the large variety of plants and the transfer of plants from place to place incapacitate a fertigation system. Even where fertigation is possible, there are still problems of unexpected rains that may cause a complete leaching of the fertilizer. Some fertilizers cannot be infiltrated in a solution form because they are almost immediately immobilized. Iron and phosphorus are two such examples. In using fertigation, it was found that some damages to the soil surface occurs. However, the advantages of fertigation are very high, except that it is not applicable where there is no proper irrigation system and where a large part of the water supply is by rain.

A third approach to make the fertilizer delivery and availability within the right limits is to encapsulate a fertilizer in the form of a prill or a granule, coated with a thin layer which is either partially soluble or of a limited permeability to the material in solution. This coating is supposed to moderate the release of the fertilizer from the inside of the capsule out into the surrounding soil for a long but inaccurate period.

One of the common methods is to make the coating full of small pores through which the solute can diffuse. This method cannot, usually, extend the release of solute over a long enough period because the rate of diffusion is too large for the size of capsules that are practically possible to be buried in the soil. It is necessary to provide sufficiently large number of dissemination volumes for the plants to uptake the nutrients. This requirement, in turn, dictates that each capsule will be small. Another disadvantage is that the release of the soluble compound by diffusion through pores that are distributed over most of the surface of the capsule, follows Fick's law of diffusion and is typified by a high rate, in fact the highest at the very beginning and a gradual reduction of the rate with time. This form of time dependent release, is rarely fit for the plants needs. Usually the nutritional demand is low at the beginning when the plants are small and the root system undeveloped, it is highest at intermediate times and low again towards maturity or the end of the growing season. The simple diffusion controlled rate of release, leads to a conflict between too high and too low rates of release. Too high rates at the beginning can inflict stress in the plants and expose the released fertilizer to leaching and to fixation. Lower overall rates render the fertilizers not sufficiently available when they are most needed. It becomes necessary to find a method to control the time rate of release in a more sophisticated way.

Alternatives have been looked for in order to delay the release of the solubles by several methods in order that a coated fertilizer particle will remain in soil for an extended period of time before it starts releasing the soluble material. This is done by a coating which must be eroded, dissolved or biologically disintegrated before a contact is produced between the inner soluble content and the outside wet surrounding. Another approach is to let water move in by diffusion, possibly even through a vapor phase, when the coating is hydrophobic. An osmotic pressure is then built up inside the capsule so that the solution is pressed out,or it slowly diffuses through the enlarged pores of the swollen membrane.In other cases,the capsule may even be cracked open and the solution quickly drained out as encountered with sulfur coated urea and others.

In many of these cases, the rate of release is too low,or zero in the early stages and becomes too high at once, as soon as the coating is degraded.Thus, it still remains a conflict whereby if the rate of diffusion is small, the fertilizer is not available enough, and if the fertilizer is highly available it is leached out or immobilized. Furthermore, locally high concentrations of some fertilizers may even constitute a stress to the plant.

The period of time over which the soluble chemicals are to be continuously available is usually in the order of months in seasonal field crops and even longer in some tree crops. It may be shorter in some nursery plants when the required fertilizer supply is only during a relatively short time until the plants are transplanted. However, even there, the required time is at least over several weeks. It takes a special combination of means to make the fetilizers available over such extended periods, to keep each fertilizer granule small enough and still avoid the pitfalls described in the above.A method is necessary to produce a device that will release fertilizers of different kinds at a nearly constant rate over the time or even in a way that the time cumulative curve will have the shape of a sigmoid i.e. slow at the beginning and the end and high at the middle period.

An interesting approach is disclosed in the U.S. Patent No. 3,748,115 (Sommer et al.) wherein fertilizers are embedded in a hydrophobic matrix having a cylindrical shape and subsequently said matrix is partially coated with a water insoluble material to produce a capsule. Although it is claimed that the products provide an almost constant rate of release, the experimental results mentioned in the specification,do not support this claim, This method reduces the rate of release,first by the time necessary to erode or turn permeable the outer coating and by the reduced effective diffusion coefficient as a result of a reduction of the cross-section which is available for diffusion. The space is simply filled in part by an impermeable material and the individual diffusion path becomes, as a result elongated and tortuous. The reduction of diffusion is insufficient in order to attain the sufficiently long periods of release. Furthermore,the package that contains the fertilizer has a relatively low content of useful chemical.The hydrophobic nature of the porous material does not only turn the overall rate slow by a longer and tortuous path, but also tends to cut off some of the fertilizer from the surrounding by breaking the continuity of solution. Further release of chemicals is possible only through the transfer of vapor and a gradual increase of the solution volume within the pores. Once the solution renews its contact with the outside, it can be sponged away immediately. This method as well as the former one which is based on porous envelopes turn out fertilizer packages, the behavior of which is very difficult to regulate uniformly by normal industrial processes. The fertilizer's release time of individual capsules is quite unpredictable.

Another method is described in a very recent U.S. Patent No. 4,762,545 (Youset) wherein a water swellable hydrophilic polymer is infused with concentrations of plant nutritive loaded solution,followed by repeated soaking of said polymer with nutritive solution and further heated to expel the entrained water, thus leaving the nutrients entrapped in the polymer matrix.This method,notwithstanding its high energy outlay and time consuming process, cannot possibly produce a sufficient fertilizer content to make it of practical use. The amount of soluble cannot be larger than the maximum concentration in a saturated solution. It means that just the initial wetting exhausts the complete soluble content. Furthermore, the rate of release is far too high as was found by experiments.

The above brief review clearly illustrates the long felt need for an improved device to provide a desired slow release of chemicals to the soil, in order to obtain the best results concerning the growth of plants. It also indicates that the solutions so far are inapplicable, or are of a limited scope due to the following factors :

  – limitations on the type of fertilizers that can be packed into the system ;

  – overall extent of time over which the fertilizer continue to be released ;

  – improper release distribution as a function of time ;

  – inproper quality assurance ; and

  – prohibitive high costs.

It is an object of the present invention to provide a device possessing the property of a controlled and prolonged release of chemicals to the soil. It is another object of the present invention to provide a slow release device which supplies the chemicals to the soil or to the water that may be infiltrated into the soil, at a desired substantially constant rate. It is yet another object of the present invention to provide a device where, the rate of release of the soluble chemicals can be made low at the beginning, high at intermediate times and low again at the longest times. It is yet another object of the present invention to incorporate the flexible capability into the specifics of the device to meet particular requirements that may vary from soil to soil and from crop to crop. It is still another object of the present invention to provide a method and a device for slow release of very soluble fertilizers compositions which in combination will posses a lower rate of release.

## A BRIEF DESCRIPTION OF THE INVENTION

The invention relates to a device for releasing soluble fertilizers,to a humid soil,in a controlled and prolonged way, comprising : an enclosure with one opening containing a dry mixture of materials including at least one soluble component to be released into said humid soil ; at least one component being a water absorbing finely dispersed material that serves as a thickener capable to reduce the hydraulic conductivity to water to less than one millimeter per day ; the soluble component to be released being adequately selected in quantity and composition to leave a significant undissolved portion upon the initial wetting of the content of said device ; said mixture being enclosed in part by a water impermeable membrane and in part by stagnation zones which act as if they were impermeable ; said combination of impermeable membranes and stagnation zones having one opening in the enclosure allowing water flow into the volume in said enclosure, the area of said opening in the enclosure not exceeding one fifth of the cross-section of the enclosure.

The regulation of the rate of the release,is obtained not by one element in the device and one mechanism but rather by a combination of means which includes among others :
   – controlled rate of the initial wetting of the content of the device ;
   – a reduced coefficient of diffusion ;
   – flow symmetry or geometry ;
   – limited solubility of the releasable components; and
   – the prevention of mass flow of the solution containing the useful solubles due to ; suction, osmotic buildup, or to flushing.

Only a proper combination of several of the above mentioned factors will enable the production and functioning of the necessary devices, each one of them being well adapted to another set of plant growth conditions.

## A DETAILED DESCRIPTION OF THE INVENTION

The first and prime mechanism by which the rate of release is controlled, is the rate of wetting of the enclosed mixture of chemicals.Therefore,it is necessary to produce at the entrance and throughout the wetted part of the enclosure a low hydraulic conductivity. A combination of a proper geometry is coupled with the low hydraulic conductivity through the incorporation of insoluble particles that block part of the flow paths and by adding a thickening material that further reduces the hydraulic conductivity for water. This combination reduces the rate of water flow into the initially dry device and at the same time reduces the diffusion of solute coming out from it.The term "hydraulic conductivity" is used strictly for the experimental coefficient which relates to the rate of water mass flow through the wetted mixture within the enclosure and to the pressure head or suction head gradient within this mixture. This is to distiguish from the diffusion coefficient which has to do with the molecular diffusion of a given component under concentrations gradients of this component. The diffusion can take place only in a solution and therefore after the content has been wetted.

The water flow into the mixture according to the present invention is characterized by a fast but very short initial burst of water into the dry mixture and a quick swelling of the thickener within pores that are formed between particulate or porous components that have not been dissolved, the said swelling quickly producing a low hydraulic conductivity. The advance of water within the mixture is later characterized by a wetting front which moves away from the opening and clearly separates the wetted part from the yet unwetted part.It is also characteristic to the initial wetting according to the present invention, that behind the wetting front there is a zone with a lower moisture content and a lower hydraulic conductivity. Further, behind the wetting front towards the opening, a larger part of the volume is filled with the water and the thickener which cause a relative increase in the hydraulic conductivity. In fact, the formation of a relatively sharp wetting front is the result of the dependency of the conductivity on the water content. Even if the release of the solubles from the part already wetted into the surrounding would be immediate, it will be controlled by the slow rate at which the wetting front advances. However, the characteristics according to the present invention that cause a low hydraulic conductivity also cause a low diffusion coefficient so that the release of solutes after wetting prolong further the overall release time.

A further characteristic of the invention in order to further reduce the wetting rate, is the fact that the opening in the enclosure is limited to an area which is smaller than the cross-section of the enclosure that would otherwise be available for the water inflow. The special geometry of the opening and the enclosure make it possible to choose the release curve over the time, not only in getting an overall low rate,but also in the shape as will be explained in the following.

There are three basic shapes of the release rate or cumulative curve with time :

- the shape obeying Fick's law of diffusion with a high burst of solute at the beginning and gradually and monotonously reducing rates ;
- the constant or zero order rate which is nearly a straight cumulative release line, and
- the sigmoidal shape which is slow at the beginning, high at intermediate times and low at the end.

The combination of the smaller opening, in the otherwise impermeable envelope, with the slowed wetting of the content of the enclosure, provides the main means for controlling the release shape or pattern, one out of the above mentioned three shapes.

If the said opening in the impermeable envelope is of smaller dimensions than the full cross-section of the enclosure, the flow geometrical symmetry changes into another one. The simplest example is that of a cylinder with the opening covering one of its bases. Then, the opening is not reduced and the flow symmetry is one dimensional or linear. If the opening is reduced to dimensions smaller than one of the bases, to one fifth of the area or less according to the present invention, then at least during the early stages of the water flow into the enclosure and the early stages of the diffusion out, the symmetry of flow is nearly spherical.At later stages, as the wetting front advances far from the reduced opening, the rate gradually changes to one which obeys Fick's law. Thus the combination is behaving like a sigmoidal rate curve. Consider now a bag of a small thickness and with a nearly rectangular shape which is filled with the required mixture and has an opening in one of the corners.The flow in its initial stages and along most of the later stages, will have a symmetry which is nearly cylindrical and the rates of wetting and of solute relea se will be nearly constant. Only at the end when the wetting front has reached the farthest point from the opening, the rate of outward diffusion will be significantly reduced. A similar geometrical flow symmetry will take place if four holes will be made in the four corners of the rectangle and also if one hole will be made in the center of the rectangular bag surface.

It can be shown that both in cylindrical and spherical symmetries there will be a tendency to reduce the initially high rates of solute release.These rates will change the release curves into a shape closer to a first order release rate, i.e. a constant rate, and even towards a sigmoidal release shape. In fact,the flow with spheroidal symmetry tends more than the cylindrical towards the sigmoidal shape of release curve and away from the Fickian shape.

The rate curves do not fit accurately to mathematical formulas because the symmetries are not perfectly accurate throughout the release time and because the phenomenon is composed of a combination of simultaneous processes. Furthermore, the radius of the opening is a finite one and the conductivity terms change not only with the water content but also with time. However, it is possible to characterize the release curve according to Fick's law, being highest at the beginning followed by a reduced rate of release, as the inverse of the square root of the time t [release proportional $(l/t)^{1/2}$]. The cylindrically symmetrical flow is characterized in its ideal form, as having fixed rates over an appreciable part of the time, until the moisture reaches the end of the content which is farthest from the opening. The spherically symmetrical flow in its ideal form could be characterized by release rate in the early stages proportional to the square root of time (release proportional to $t^{1/2}$). As the wetting front reaches the back end of the enclosure opposite the opening, the rate of release will slow down as the solute concentration at the farthest point from the opening starts to decrease.

In order to obtain the required shapes of release curves along with a significant reduction in the rate of wetting as well as the reduction of the outward diffusion, it was found that the opening in the envelope should have an area which is not more than about one fifth of the cross-section which would have been available for the flow, had the opening been unlimited in size. The release rate critically depends on the opening size and location. This is done,as a minimum and in according to the present invention, by changing the local flow symmetry and increasing the flow resistance. Smaller holes will naturally have a more significant effect in that respect.

A preferred size of the opening depends on several other parameters : the size of the enclosure, the conductivity and diffusivity coefficients and the required overall time of release. More specifically ,there are three fundamental geometrical symmetries : the linear,the cylindrical and the spherical.There are also combined geometries that are composed of these fundamental symmetries.In one such combined symmetry, a spherical symmetry is connected in series to a linear one as in a reduced opening at the end of a cylinder which is significantly longer than its diameter. Similarly, in another combination, there is a reduced opening along the edge of a rectangular thin bag. Such an opening produces an initial wetting which follows a cylindrical symmetry and later, in series with a linear element. If the rectangular bag is not thin and the hole is considerably smaller than the thickness,then the initial symmetry is spheroidal near the hole and later comes in series either a linear or a cylindrical symmetry.

In the cylindrical symmetry, the enclosure may be seen as a circular sector with a central angle. The wetting time is then proportional to the square of the large radius of the sector and to the logarithm of a ratio of this large radius to the radius of the opening. In the cylindrical case, the radius of the opening has a secondary effect on the rate of release and the overall release time.By reducing the hole size from a fifth of the large radius to one fiftieth,the rate is expected to reduce a little more than twice. Reduction of the opening radius to one over five hundreds would cause the overall time of release to increase only four folds.

As mentioned, the experimental results do not conform accurately to the ideal and simplified mathematical formulations. However, the general trend is the same and it leads to the choice of the preferred ratio of the radius of the opening to the radius of the cylindrical sector to the range of 1/20 to 1/100. The preferred ratio of the area of the opening to the area of the undisturbed cross-section in the largest part of the sector, remains in the cylindrical symmetry as the ratios of the radii. These preferred dimensions conform to the major parts of the anticipated uses.

In a spherical sector of a certain central angle, the overall initial wetting time is also proportional to the square of the large radius of the sector and to the ratio of the large radius to the radius of the opening. .Here,the radius of the opening has a major effect on the overall time of release. The preferred ratio of radii in the spherical symmetry is between 1/3 to 1/30.Accordingly,the preferred ratio of the opening area to the area of the undisturbed largest cross-section changes as the square or about 1/10 to 1/1000.

The time estimate and the shapes of the release curves are more complicated in the combined geometries, namely, the cylindrical with linear in series, the spherical and cylindrical in series and the spherical with linear in series. If the linear element in series following the spherical or cylindrical, is significantly longer than the large radius, then the overall time of wetting will depend on a ratio between the rate determining opening and the distance to the farthest point from the opening. However, the preferred dimensions in accordance with the present invention remain unchanged. The overall time and the instantaneous rate are a matter for design.The determination of the reference cross-section is more difficult in some geometries of the enclosure, but the rule remains roughly the same. Accordingly, it is relatively simple to choose a shape of the enclosure and the geometry of the opening in order to get the required results, once the instantaneous rates are determined experimentally for a given mixture.

There is at least one other mechanism, in accordance with the present invention, that helps to reduce the initial rate of soluble release, as it would be released obeying Fick's law. The mass flow of water into the enclosure during the wetting of the content, counteracts the diffusion outward. This is a direct result of the essential elements in the embodiments of the present invention, as the content must be initially dry and the wetting should be done by a mass flow through an opening of a limited area.

Each enclosure can be separated from the outside environment in part by an impermeable membrane and in part by stagnation zones. Each such enclosure has only one opening. The simplest example is that of a long cylindrical package wrapped by an impermeable envelope with two holes in the two bases of the opposite sides.If water can enter in one end of the cylinder and come out at the other,then a through flow results which can wash out quickly the solubles stored within the package.For this to happen,the content of the package has to be wetted first throughout. However, if the enclosure is initially dry and the water enters symmetrically from the holes at both ends,the area around the half length of the cylinder,where the two wettings fronts may meet, will act as a zone of stagnation. There, the water flow will tend to vanish or be negligible and the concentration gradients of the solubles vanish too.Thus,from the point of view of transfer processes the stagnation zone acts very much like an impermeable partition across the cylinder half way between the two holes. More holes can be installed over the envelope of the cylinder. Stagnation zones will then be formed between them, within the cylinder (delineation individual enclosures around each one of the openings) each enclosure influencing the release of solutes from one opening only. The resulting stagnation zones tend to be in symmetry lines between the holes.

The present invention is embodied by openings,one opening for one enclosure as long as the ratios of opening area to the overall cross-section of the enclosure is below the above stated limits. In the case of many adjacent openings, the stagnation zones tend to become closer and closer and the volumes enclosed by them, closer to narrow linear cylindrical columns which are parts of the larger package. The undisturbed cross-section becomes closer and closer in area to the opening itself. Clearly, the more openings in the outer envelope of the package,the smaller will be each individual enclosure and the shorter is the time of the release. Furthermore, the narrower is each of the enclosure, the release curve becomes more closer to the Fickian type release.

The device in accordance with the present invention, can be made of a large package with an impermeable envelope all around it and between the individual enclosures which are parts of the large package.The enclosures in turn can be surrounded in part by impermeable envelope and in part by stagnation zones, wherein each enclosure has one opening. According to a preferred embodiment of the present invention each package must have at least one enclosure and not more than few enclosures. The number of openings in the large package is identical with the number of secondary enclosures.Generally,the number of openings and enclosures in the large package should not exceed ten.

The soluble material to be released from the device may be the major fertilizers like nitrogen, potassium and phosphorus and are selected from a large number of chemicals such as superphosphate, urea, potassium chloride, potassium nitrate,potassium sulfate, ammonium phosphates, ammonium nitrate, potassium phosphates and mixtures thereof. In order to get a significant increase in use efficiency by positive synergistic effects between fertilizers, the following combinations are suggested as examples :

- Nitrate : ammonium :potassium, for increasing both efficiency of nitrogen and potassium and also for creating the common ion effect in the $K^+$-$NH_4$-$NO_3$ system.

- Phosphates with $NH_4$ or $K^+$ in order to induce rhizosphere (soil-root interface) acidification by roots excreting $H^+$ in response to $K^+$ or $NH_4^+$ uptake and thus increasing the P availability.

- Iron with $NH_4^+$ and $K^+$ ions in order to induce acidification of the rhizosphere and hence its availability. The device will impart great advantages when nitrogen fertilizers of beneficial composition selected from $NH_4^+$ and $NO_3^-$ ions are present wherein the ratio N as $NH_4^+$ to N as $NO_3^-$ is not beyond 2 :1.A balanced supply of $NH_4^+$- $K^+$- $NO_3^-$should result in most cases in a very significant yield increase as well as an increase in protein content of plants and particular grains.

Other soluble chemicals inside the device according to the present invention can be selected from various micro-elements such as Fe, Mn, Cu, Zn, B, etc.

The present invention involves a combination of means that brings about the required behavior as well as the freedom to design special versions of the device in accordance with the invention to a wide range of extremely different cases. The applications vary as to the specific chemicals, to the specific sites and form of application as well as to the time requirements.

Most soluble fertilizers which are relevant to the present invention, are of relatively high solubility.They are so soluble that when soaked with water they turn almost completely into a solution. Once in solution, the fertilizers or other chemicals diffuse out at a rate which is very similar for all soluble minerals. A typical constant of diffusion is between one and two times $10^{-5}$ $cm^2$/sec at 25°C or between one and two $cm^2$ par day. Ammonium nitrate solubility is very high ; at 25°C 214g dissolve in 100 cc of water. At a concentration gradient of even 0.5 gram per cc, the rate of depletion of solute is nearly 1 $g/cm^2$ per day.In this manner,the time needed for exhausting a cylindrical container of 1 cm length opened at one of its bases is less than one day. To increase the exhaustion time by at least two orders of magnitudes, as quite typical for many agricultural applications, it is necessary to use one of the following two ways : (a) to increase the dimensions of the container by a square root of the time increase, i.e. by a factor of at least 10, or (b) to reduce the effective diffusion coefficient by two orders of magnitude.

According to the present invention it is possible to utilize a balanced combination of the above two ways, depending on the type of application. However,if a plurality of the fertilizers in an enclosure are to be buried in soil at many points around the plants root space, it might be quite difficult to have them in large dimensions that will provide both prolonged release time and large number of feeding contact points. In other words, the larger the number of openings and enclosures, the smaller will be the size of each enclosure.Furthermore, it is not an easy task to reduce the diffusion coefficient by two orders of magnitude. Therefore,it has been found necessary to undertake additional means to slow the rates of solubles release, beyond the moderation obtained by molecular diffusion alone. In the following, it will be described how this embodiment of the present invention lend itself to these additional means.

In two embodiments of the invention, the enclosures are sizeable whereby the long release time may be obtained by the large size of the enclosures. One such embodiment of a large enclosure is by producing a device containing soluble fertilizers that can be placed in the flowing water in an irrigation furrow or in a leveled irrigation basin. The fertilizer is released through a hole or through few holes in the fertilizers package into the flowing water. The released fertilizer is then carried to wherever there is irrigation and it penetrates the soil with the water. Every time the furrow is wetted, the fertilizer is delivered into the soil. It is the application closest to the so called " fertigation " which has been described above, though, where there is no sophisticated irrigation system. The amount of soluble chemicals packed into the enclosure is such that it provides a fertilizer to the whole furrow over at least one irrigation cycle. The dimensions of the enclosure in this application may be in the order of one decimeter or more. The time of release can thus be prolonged by the size of the package as well as by the reduced size of the opening compared to the enclosure as a whole and the other means mentioned above, such as the use of a solid thickener or a solid skeleton, etc.

Still, if most of the fertilizer dissolves on the first wetting, a mere enclosure with one hole will not possess the prolonged release,because the solution can be readily drained, washed away or sucked out. Some kind of an inner stable medium must be present in the enclosure, which prevents mass flow of the solution, reduces the rate of wetting of the content and also reduces even the diffusion coefficient of the solutes.

A second use that leads towards large dimensions of the embodied enclosure,is the in-situ production of an under-ground sleeve, filled up with some insoluble granular material, soil in this case, along with the solutes. Production of this enclosure in-situ, makes this embodiment feasible because the large amount of inert or non-nutritive material does not have to be packed, stored and transported to the field in prefabricated enclosures. In such large enclosure, the diffusion of solutes does not have to be reduced as much as for small capsules.However, there are suggested some special demands from the large size in-situ devices, such as the use of a thickener and in many cases a reduced solubility of the fertilizers.

In the small enclosure, it has been found that there are at least two additional means to be preferred for reducing the rate of diffusion in addition to what has been mentioned above. A simple method is to place a solution within a porous medium made of undissolved particles, e.g. sand, chalk, gypsum, etc. However, this arrangement cannot reduce the rate of diffusion by more than a factor of several units, and in order to have this limited achievement, the enclosures must be packed with a non-nutritive ballast which exceeds 50% of the volume and therefore turns the device quite expensive in terms of unit net weight of fertilizer delivered to the plants. Embedding the solute within the pores made by a hydrophobic material, as aforementioned, is not much different than this method for reducing the diffusion rate by a particulate or porous material. If there is a difference, it is for the worse since the hydrophobic porous medium may enhance the transfer of vapour and the build-up of osmotic pressure that will squeeze out the solution as a whole. According to the present invention, the solutes and the thickener contained in the enclosure are such that they do not dissolve completely upon the initial wetting, thus temporarily serving as an inert particulate or porous medium.

The prevention of an immediate dissolution upon initial wetting is achieved by a combination of means and some typical examples are brought in the following :

First, the mixture is packed as densely as possible, increasing the amount of solids and reducing the amount of water in the pores. By reducing the ratio of water to solutes, the chances are better to have some undissolved solutes.

Second, at least some of the chemicals may be chosen of a lower solubility. This choice has the added benefit of reducing the rate of outward diffusion concentration gradient.

Third,the common ion effect,as will be explained, reduces the solubility of at least one of the solutes.

Fourth, in a dense mixture with a certain low porosity, a thickener is added. If for example the porosity is 30% by volume and the thickener is 5% by volume of the total mixture and it is placed within the pores, then the maximum water at saturation is reduced to 25% and the solutes increase to 75%.

Fifth, the need for an initial wetting and the advance of the wetting front within a porous medium produces a zone of partially wetted unsaturated mixture. In this wetting zone, it was observed that much of the solutes remain undissolved. In the interstices the thickener can swell and reduce considerably the rate of flow of water to further move the wetting front. It also reduces the rate of diffusion of the dissolving solutes outward. Thus in release experiments three zones can be noticed.The first, is the dry mixture yet unwetted. It is limited by a very clear wetting front.The existence of such a sharp wetting front is a proof that the zone on the other side is only partially wetted and the hydraulic conductivity is strongly dependent on the degree of wetting. The second zone is then the partially wetted and partially dissolved zone where a significant part of the solubles are yet undissolved,the thickener is partially swollen and thus the resistance to the water penetration is the highest.The third zone consists of a gel containing dissolved chemicals diffusing out of the enclosure. The thickener with the solution (gel) fills then the evacuated space.

In summary, one aspect of this invention is to have solubles that do not dissolve completely on the initial wetting. A second means to reduce the rate of diffusion of the outgoing solute as well as the rate of wetting is obviously the use of thickeners including hydrogels. Hydrogels are defined as cross-linked macromolecular networks swollen in water or biological fluids. The networks are three dimensional and crosslinks which are formed by covalent, ionic, Van-der-Waals and hydrogen bonds.Typical examples are polycarbonates,carboxymethylcellulose (CMC), polyvinyl alcohol, hydrolysed and grafted carbohydrates polyacrylates and methacrylates like a hydrolysed polyacrylamide. In addition one can use bentonite, glues and cements as gel forming thickeners.

Unfortunately, the reduction of diffusion coefficient by these thickeners is in most cases not much more than by the inert particulate material. Even a combination of a thickener that swells within the pores of an inert skeleton cannot reduce the rate of diffusion by more than one order of magnitude at the expense of more than 50% in the enclosure being not useful as nutrient. However,the thickener, as already explained, reduces the rate of wetting which is of a prime importance for controlling the release rate.

Summing up, the first and foremost means for reduced release is the requirement already mentioned above, that the thickener and soluble material mixture will be packed dry. Next, it is required that the type of thickener and its concentration will be such that the wetting process will be slow. In addition, the diffusion of solutes is reduced to a certain extent by the gel formed in the enclosure.

## FIGURES DEMONSTRATING EXAMPLES OF EMBODIMENTS OF THE INVENTION AND EXPLAINING THEIR FUNCTIONING.

**Figure 1** : The advance of wetting front in a cylindrical device, 7 cm long with 10 mm opening diameter, containing 10% CMC and 90% fertilizer. The sign ✳ stands for $NH_4NO_3$ and the dark rectangles for $KNO_3$.

**Figure 2** : Fractional cumulative release of KCl from 5 cm cylinders with a 5 mm opening, containing: 0, 1 and 5% of CMC.

**Figure 3** : Fractional release of $NH_4NO_3$ from a cylinder 7 cm long with a hole diameter of 2 mm in its basis, as affected by percentage of CMC. The signs $ stand for 20% CMC and dark rectangles for 10% CMC.

**Figure 4** : Fractional release of $NH_4NO_3$ as affected by hole diameter. Cylinder of 7 cm containing 10% CMC and 90% fertilizer.

**Figure 5** : Ammonium nitrate release representing typical release curves : Dark rectangles standing for Fickian release (large opening) ; Open rectangles standing for zero order release (typical to small opening relative to basis diameter),and dark triangles standing for classical sigmoidal release (a mixture of sand, CMC and fetilizer).

**Figure 6** : cumulative release of $NH_4NO_3$ and $KNO_3$ from a cylinder 7 cm long with a 10 mm opening, containing 10% CMC. The slower release of the less soluble salt clearly appears.

**Figure 7** : Cumulative dry matter weight of Ryegrass as affected by 3 applications (1.5 g/N/pot).Dark rectangles : basic dressing (control) ; dark triangles : devices which contain 90% ($NH_4NO_3$ ; " · " : devices with a 1 :1 mixture of $KNO_3$ and $NH_4NO_3$.

**Figure 8** : Cumulative dry matter weight of Ryegrass at a 3.0 g-N/pot. Dark rectangles : basic dressing (control) ; dark triangles : devices containing 90% $NH_4NO_3$ ;"·" :devices with a 1 :1 mixture of $KNO_3$ and $NH_4NO_3$.

**Figure 9** : Cumulative leaching of nitrates as affected by the hole diameter in a 5 cm cylindrical devices used in a pot experiment. Figure 9a is for 1.5 g-N/pot and Figure 9b for 3.0-N/pot. In both cases a comparison is made to basic dressing.

**Figure 10** : Cumulative dry matter yields as affected by hole diameter in 5 cm cylinders as in Figure 9.

**Figure 11** : Cumulative leaching of nitrate from pots receiving a basic dressing (dark rectangles) from pots with a pipe 12 cm long, with a 5 cm diameter and an opening slot 1 cm wide containing 3 g $KNO_3$ per pipe.

**Figure 12** : An impermeable underground strip with the beneficient mixture placed above it demonstrating the formation of stagnation zone to prevent leaching, this configuration is not in accordance with the present invention.

**Figure 13** : An impermeable underground film strip bent into a pipe that encloses the beneficient soluble mixture.

**Figure 14** : Demonstrating a cylinder with full opening which is not in accordance with the present invention.

**Figure 15** : Demonstrating a cylinder with a reduced opening in accordance with the present invention.

**Figure 16** : Demonstrating the stagnation zones and the wetting symmetries in a rectangular bag with a central opening.

**Figure 17** : Demonstrating the flow stagnation zones against leaching in a rectangular bag with openings in the corners and the edges.

**Figure 18** : Demonstrating the wetting symmetry in rectangular bags with various positions of the openings.

**Figure 19** : Demonstrating the setting symmetry of a cylinder with one opening and two openings.

**Figure 20** : The wetting symmetry in a cylinder with many holes and many enclosures.

**Figure 21** : A strudel type device made of a rolled rectangular bag.

**Figure 22** : A strudel type device of a rolled film with a layer of the mixture.

**Figure 23** : Different details of an in-situ device formed by a folded film strip and by prefabricated sleeve.

**Figure 24** : A device which is outside the soil and the opening is put in contact with a humid soil.

## DETAILED EXPLANATION OF THE DRAWINGS

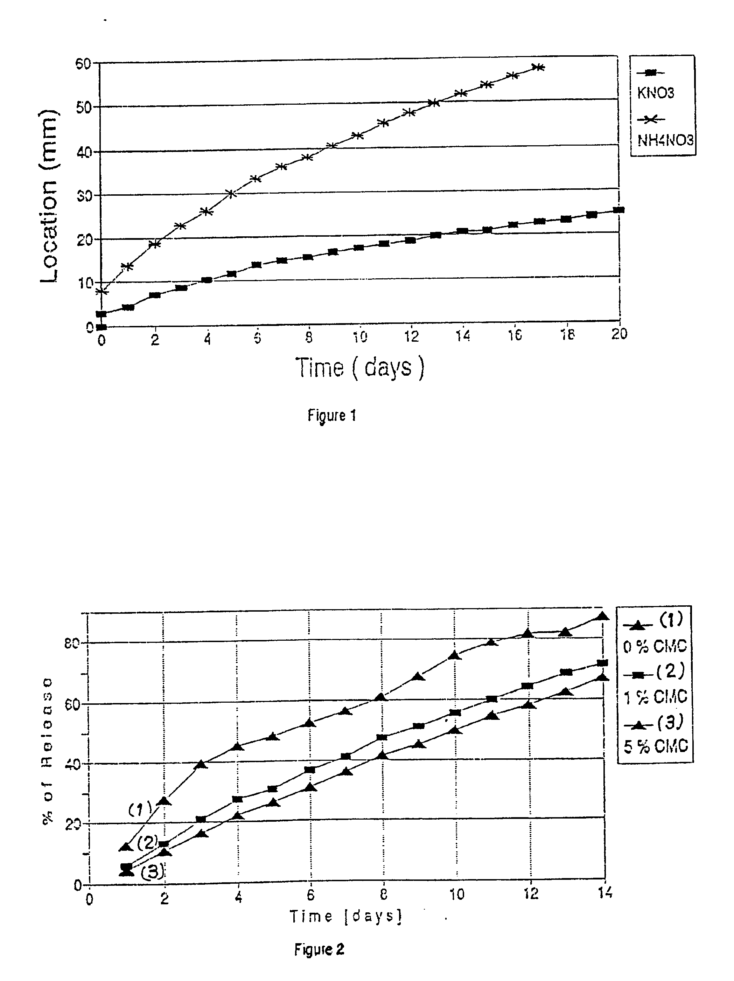

Figure 1 illustrates typical rates of advance of the wetting front within a linear cylindrical enclosure, where the whole cross-section is available for flow.In general, lower concentrations of CMC (10%) induced a faster advance of the wetting front. With no CMC the wetting was accomplished in less than 1 hr. The curves in Figure 1 illustrate the wetting of two mixtures both containing 10% dry CMC,90% dry salt and $NH_4NO_3$ respectively.The much higher solubility of the ammonium salt, created a much larger space for the swelling hydrogel which resulted in a lower density of CMC at the front and thus a faster advance of the wetting front.

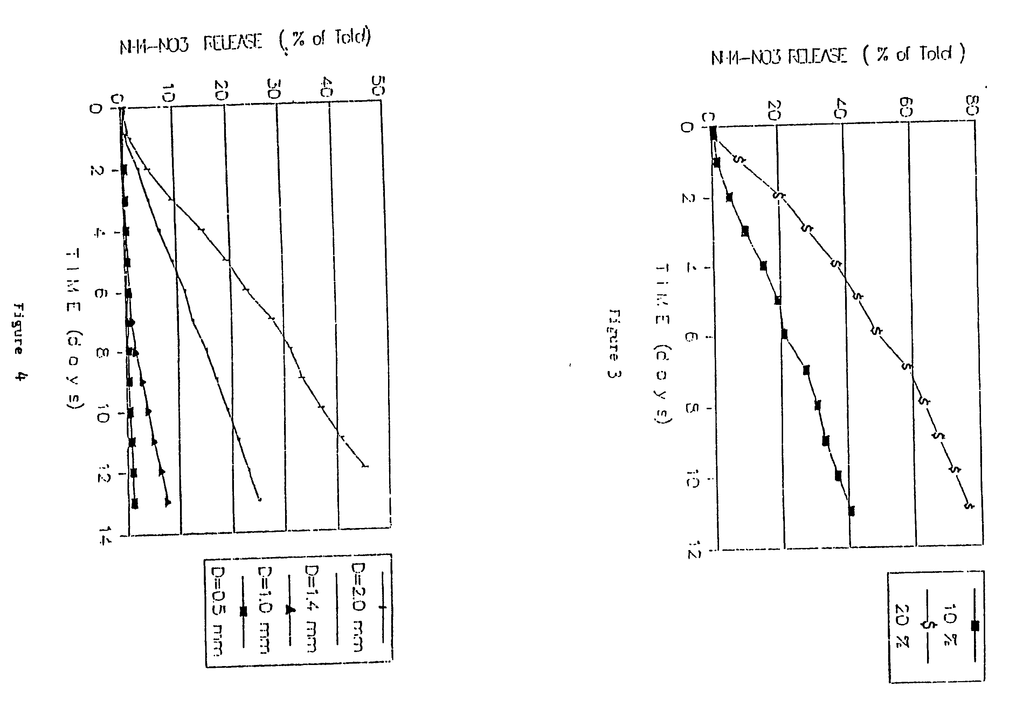

Figure 2 demonstrates the reduction in KCl release as the concentration of CMC increases from 0 to 5% of the dry mixture content. This experiment is also performed with a cylinder having an opening of its full size basis.

Figure 3 demostrates the effect of overloading the mixture with CMC on the release of ammonium nitrate from a cylinder with a full basis opening. The use of 20% CMC in this case caused an excessive swelling thus squeezing out the wet mixture and resulting in a much faster release than with 10% only. A dry thickener should thus be introduced to slow down the rate of wetting of the mixture and afterward to slow the diffusion of the solute out of the device. An excess of the swellable material should be avoided and right proportion should be the one producing the lowest hydraulic conductivity by filling up the volume freed by the dissolving salt, but not beyond that. In a preferred embodiment the CMC should be added between 3 and 10% by weight. Within these limits the amount of CMC is sufficient for filling up the interstices among the particulate materials forming a thick enough gel. It is also sufficient to fill up the space that was freed by the dissolved minerals, once the ionic strength has been reduced.Hydrolysed polyacrylamide (PAM) must be below 10% and the preferred limits are 2% - 5% by weight for the same reasons as the CMC. Of course, CMC and PAM are only two typical examples.

An undissolved skeleton which is not usable by the plants can have a further beneficial effect in reducing the wetting and the diffusion rates and providing a mechanical stabilization effect.

According to another embodiment of the present invention it is possible to provide a skeleton without wasting the enclosure for carrying dead weight. This was done by having a mixture which does not dissolve completely by the initial wetting. The rate of mass water flow is reduced roughly as the viscosity of the hydrogel increases. This viscosity can be many orders of magnitude higher than of pure water. The hydraulic conductivity of some gels can reduce $10^{-10}$ cm/sec or one per ten tousands cm per day.If the gradient is measured even in hundreds, the actual rate of wetting is very low.The upper limit of the conductivity for the swollen thickener is in this invention $10^{-6}$ cm/sec or about one millimeter per day. However, the preferred limit is one tenth of that. The combined use of undissolved particulate material of a small particle size and the use of a thickener reduce considerably the hydraulic conductivity.

There is another important benefit to the use of the low hydraulic conductivity materials in mixture with the solubles, when they are properly chosen. In soil there are cyclic changes of moisture content : on drying, the solution within an enclosure can be readily sucked out, and on rewetting water may be imbibed back into the inner volume of the enclosure.Some existing slow release fertilizers on the market which are granulated are very sensitive to wetting and drying ; some actually crack as a result of such cycles and loose completely the control on the rate of release. This is prevented if the particulate material is hydrophilic, allowing water flow in and out a device, and its particles are fine enough. If there are sufficient particles which are smaller in size than 20 micrometers, the pores may be only few micrometers in size. The suction necessary to get a solution out of such pores is approaching one atmosphere. Obviously, if there are particles smaller than 20 micrometers there are pores which are even smaller and the required suction for sucking out water even higher. Besides the use of fine particulate materials, hydrogels can prevent the solution from being drained freely out of the enclosure due to their water holding capacity and due to their high viscosity or even some shear strength.

As should be realized, not all thickeners are equally effective for the present invention. Under the ionic strength of the fertilizers solution, many will flocculate.The specification is therefore to have a low hydraulic conductivity so that the wetting front, under the concrete conditions inside the enclosure, will propagate slower than 1 mm/day. The conductivity should be sufficiently reduced and the pores filled with the low conductivity gel with as little as possible of excess swelling. Any person skilled in the art can then make the proper choice according to the specific requirement.

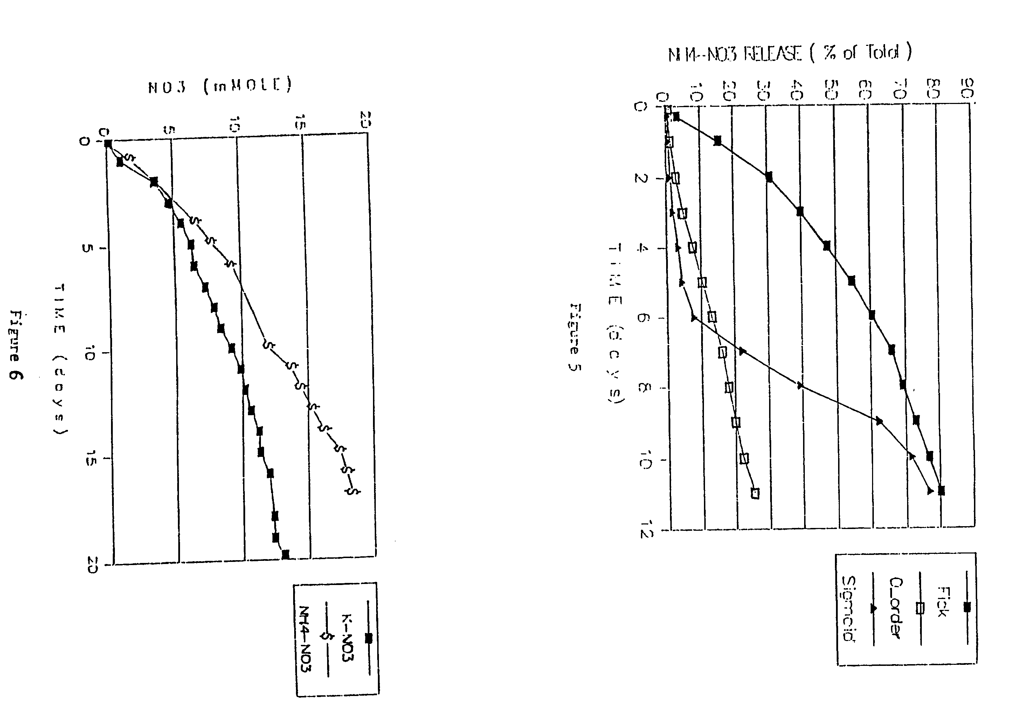

A further embodiment for utilizing the device in a way that the overall rate of release is kept low enough, is by reducing the area through which the wetting of the mixture and later the diffusion out can take place. This has been discussed above. In Figures 1 to 5, it can be noticed the combined effects of opening size with different thickeners, with inert material and with several soluble chemicals. Figure 1 shows just the rate of front advance and wetted volume. Figure 4 shows the cumulative percentage of fertilizer release as a function of the hole size in a cylindrical capsule which is 5 mm in diameter. The release rate is, in fact, experimentally intensified by a continuous leaching (creating a continuous sink at the opening boundary), while in real soil the increased evacuation of solubles occurs only in certain periods. The equivalent real times of exposure to perfect sink conditions in soil would be considerably longer than in Figures 1 to 5.It is obvious that by reducing the hole size from 2 to 0.5mm diameter the cumulative release over 14 days was reduced from about 50% to less than 2% of the total $NH_4NO_3$.Cyclic wetting and drying experiments have also been peformed, but their results are not shown.

In Figure 5 it is possible to observe solute release curves of the three types obtained by different configurations of the capsules, different hole sizes, different amounts of inert material and different concentration of CMC. Figure 4 provides evidence to constant and sigmoidal release. With the larger openings of 1.4 and 2 mm the release appears to be linear, whereas with the smaller ones it is close to zero at beginning starting to build up slowly. The smaller the opening size as compared to the size of the basis of a cylinder, a more pronounced spherical geometry will dominate the water entry into the device.

The ability to control the shape of the cumulative release is unique as it regards fertilizers and the time scales needed for their controlled release, not so much in degree but in kind.

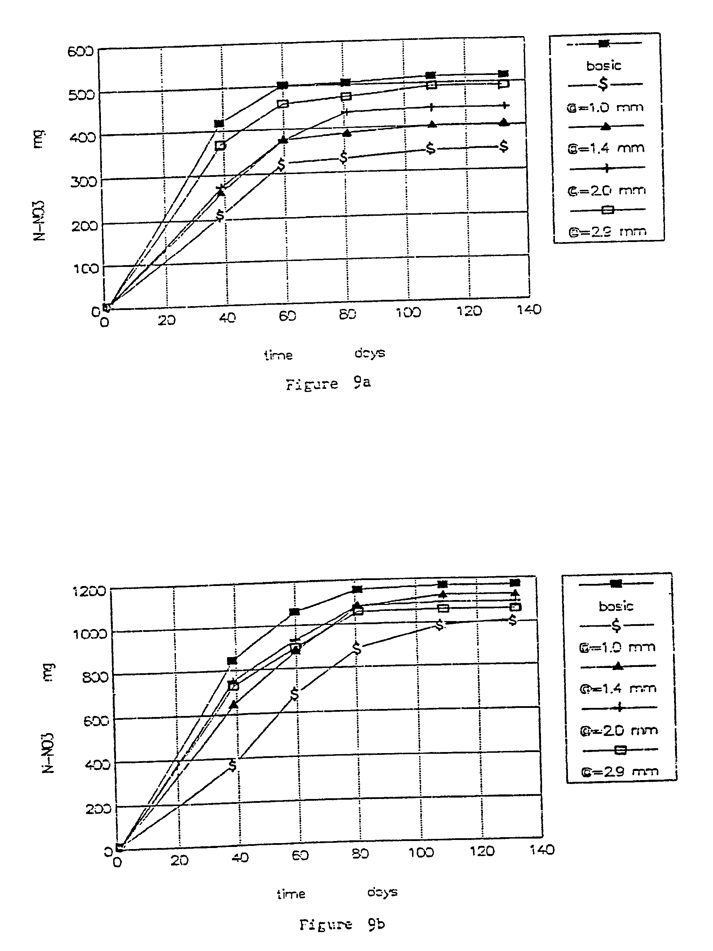

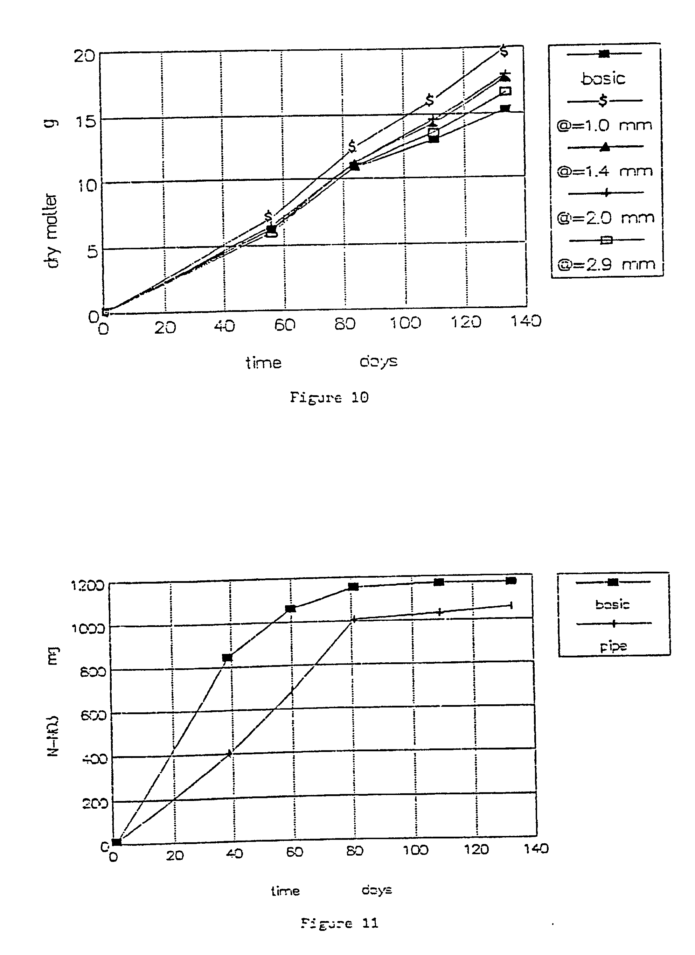

Figures 9 and 10 show results of leaching and of dry matter yields in a pot experiment with devices similar to the ones used in Figure 4 based on $NH_4NO_3$. Rye-grass was grown in 4 liter pots containing a sandy loam and receiving two nitrogen rates of 1.5 or 3 g nitrogen/pot. The plants were grown for 135 days and leached 5 times in excess in order to mimic leaching conditions. Plants were cut 4 times during the growth period. All treatments were compared to a basic dressing with fetilizers before planting. Results of nitrate leaching in Figure 9 are in accord with those obtained in the laboratory experiments as reflected in Figure 4. The highest rate of leaching was observed with the basic dressing and a much lower one with devices having an opening of 1 mm. Noteworthy is a reduction or more than 50% in nitrate leaching after 40 days when comparing the basic dressing to devices having 1 mm opening.

Figure 10 shows the cumulative dry matter yield of rye-grass obtained for the same treatments as in Figure 9 (at 1.5 g nitrogen per pot). As a rule, the yield increases as the hole diameter decreases and the lowest yield is obtained with the basic dressing (30% lower than the fertilization with the device with 1 mm holes).

In summary, in the present invention there is a unique combination of : a thickener which is definitely preferred to be hydrophilic and water imbibing ; preferred to be initially dry ; in a mixture with soluble fertilizer ; solutes which do not dissolve immediately on the first wetting ; a sharp wetting front, and a limited opening size. Together, they produce a unique combination of properties : they prolong the release of fertilizers from the enclosure ; they prevent pouring out of the solution which is formed within the enclosure, by wetting and drying, by osmotic build-up or by mass flow through the enclosure from one end to the other. It can also change the shape of the release curve from the typical Fick's type, with the initial burst of solutes outward, to he more favourable constant rate or slow start (sigmoidal). According to another embodiment of the present invention, the device is most useful when comprising two or more salts with common ions. There are three outcomes to this co-placement in term of reducing the rate of release :

(a) A lower concentration of some of the ions (common ion effect) means a proportionally lower concentration gradient and diffusion rates.
(b) The reduced solubility causes the minerals to remain in the solid form much longer. The solid phase particles of slat act as an insoluble skeleton that at list for a while, moderates the effective flow rates, replacing the need for insoluble inert particles of porous matrix.
(c) Co-placement of the two important nutrients such as potassium and nitrogen increases the overall volume of the chemicals and proportionally the size of the enclosures. The result is a prolonged release time which is proportional roughly to the dimension squared. Another benefit of co-placement, is of several growth factors that show a positive synergism on the yield.

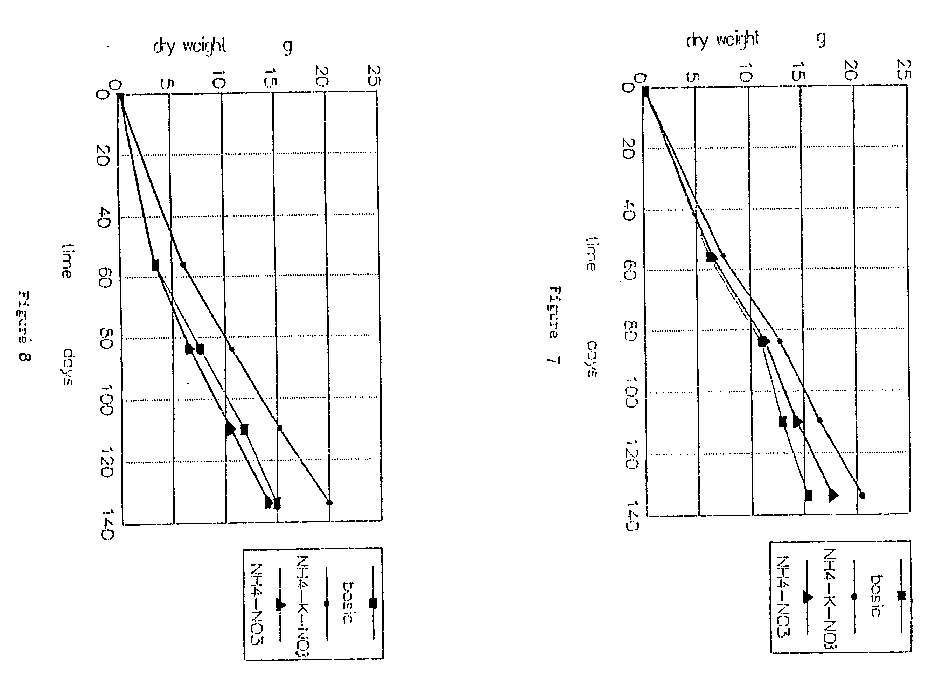

Figures 7 and 8 demonstrate the beneficial effect which is achieved in dry matter yield with a device containing 10% CMC and 90% of a 1 :1 mixture of $KNO_3$ and $NH_4NO_3$ as compared with a mixture consisting of $NH_4NO_3$ and CMC only. However, both mixtures were superior to the basic dressing of $NH_4NO_3$ in terms of dry matter yield and reducing the nitrate leaching.

It has become a common knowledge in agronomy that nutrition with balanced ammonium and nitrate proportions has a special benefit for plants in increasing yield and protein content. This effect is enhanced even more in the presence of potassium. However, without fertigation or slow release fertilizer, this combination of nitrogen sources is hard to attain, mainly because of the fast transformation of ammonium to nitrate by the nitrification process. Many other combinations can now be attempted in which ammonium and potassium salts are mixed with microelements or phosphorus to enhance their availability to plants.

In summary, the co-placement of different soluble nutrients is another preferred embodiment of the present invention. Most of the prior art does not permit this type of co-placement for one reason or another. Thus for example in the U.S. patent No. 4,762,545, a solution of more than one mineral with a common ion will enrich a gel with the same proportion as in the solution and will immediately dissolve every amount of the solubles as soon as the dried gel is rewetted. In the U.S. patent Number 3,748,115 the porous skeleton is made by a non-nutritive material rather than by a temporarily non-dissolved mineral. Many so called slow release materials are specific to certain nitrogen fertilizers alone because of their make-up. Some depend on the ability to melt the fertilizer by prilling. Others require humidity in their preparations for granulation or for other purposes that would require a cumbersome drying in the presence of a hydrogel.

As already mentioned, there is a large assortment of soluble materials that may be charged into the enclosure. Nitrogen fertilizer has been the main target for slow release efforts. However, many other materials could equally be utilized. One important example is iron in the form of sulfate, or another cheap and common salt, which could replace various expensive chelates, used for the correction of chlorosis due to iron deficiency, as long as it is released slowly and continuously. The enclosures which are used for the main fertilizers can be used, practically with no additional cost for such microelements. Another embodiment in accordance with the present invention, is to use particles larger than 20 micrometers and to have a small portion of the particles smaller than this size. If the size of the enclosure is large, the gel is thick enough and the opening is small, they will compensate for the coarser texture of the mixture within the enclosure. The hydraulic conductivity will be reduced to the square of the dominant particle size and the suction at which water can be sucked out while the amount of the entering air is inversely proportional to this diameter. According to another embodiment of the present invention one part of the grains present in the mixture,is designed in size and quantity to fill up the pores of another fraction in order to obtain the highest possible density and the small volume of pores that may require filling with a hydrogel.

A still other embodiment of this invention is that at least one of the components in the mixture that fills the enclosure, can be sintered by heat and pressure, or melted to produce a cemented mixed material of the least possible porosity.

A typical example, as cited above, is the mixing of ammonium nitrate with potassium nitrate,the latter being of a much lower solubility. In this mixture, the potassium nitrate solubility is considerably reduced by the so called "common ion effect". At the early stage of wetting it remains materially undissolved.Only when the diffusion of the ammonium nitrate is under way and there are lower concentrations near the opening, the solubility of the potassium nitrate is gradually increased.

Another example is the addition of urea as part of the mixture and its use as a cementing agent and a filler to the pores coming close to zero pores by heating the mixture to the melting point of the urea.

The device according to the present invention can be prefabricated or made in-situ.The shape of the enclosure may take many geometric forms such as : large diameter and small length, narrow and long cylinder, spheroids, strip-like enclosures, rectangular bags, "strudel"-like rolled enclosures, etc.One may also consider the use of a device in the form of a long tube with one or more openings, continuously or divided like sausages, or both ends brought together in the form of U tube, or straight with one end closed.

The stagnation zones for water flow have another meaning, in addition to the specific one as given above, where wetting fronts from different openings meet.The additional meaning is in fact the classical one and it is a zone where a through flow which is entering and coming out from the enclosure, does not reach the said zone. In this manner, very few stream lines, it any, pass through the stagnation zone where due to flow symmetries or near by boundaries, the flow velocity vanish. There are many configurations which produce the required symmetries and the required stagnation zones.

The simplest example is a flat or slightly curved horizontally lying impermeable membrane, at the center of which there is a stagnation zone formed for flow which is mostly vertical. If the dimensions are large enough, the release of solubles lying above the membrane by leaching and by diffusion can be limited. However, this principle alone can not be sufficient to obtain the desired result. The device according to the present invention has the aim to prevent fixation and mineralization or denitrification of the soluble materials in soil. In addition, it will protect the plants from the stress induced by temporary overdose. The nearest approach to a perfect stagnation,is a container with a single,relatively small opening. It is the aim of the device according to the present invention, to produce first of all a stagnation zone and then to incorporate the other required features.If the thickener is missing from the mixture which is placed within the enclosure, then several geometries of the device must be avoided due to the danger that water will form a through flow. The need for an initial wetting and the presence of a thickener permits the use of configurations that would not otherwisw prevent a through flow.

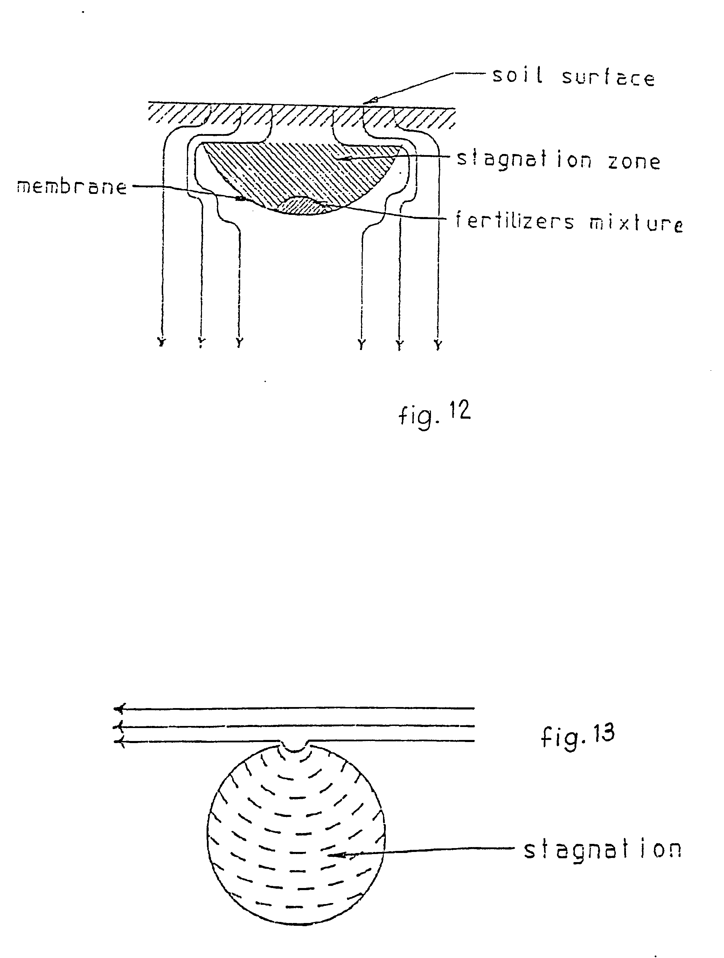

Figures 12-25 illustrate some of the possible geometrical embodiments of the device, its shape and its openings, as well as some of the configurations which are excluded from this invention.

Figure 12, demonstrates a cross-section through the soil with an in-situ membrane stretched across and extended, like a strip normal to the drawing plane. It is slightly curved. At the lower part of the curved strip, a mixture of the solubles and the thickener may be placed, possibly also after mixing whith soil. Stream lines are shown to flow down, circumventing the location of the main volume of the solubles. Thus, it is possible to prevent the leaching of the solubles by rain or irrigation water. The zone where the solubles are placed is a stagnation zone in its classical meaning. However, this is not the stagnation zone in according to the present invention since the zone will be quickly wetted. There is no limitation on the opening through which water can penetrate. The chances are that the solubles will be quickly dissolve in solution and only large dimensions across the impermeable strip will prevent it from being diffused out and eventually leached.

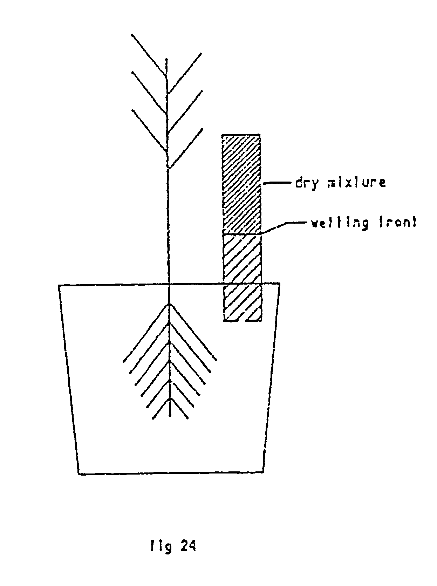

Figure 13 illustrates a modification in the shape of the impermeable strip cross-section. It is bent up to leave only a narrow, long opening. This shape conforms to one of the possible geometries in accordance with the present invention. In this Figure, the more or less horizontal lines illustrate possible stream lines that do not penetrate into the main volume which is enclosed by the membrane. There are also rounded broken lines within the enclosure that depict the wetting front as it advances downward with time. There will be no disadvantage if the opening will be left not at the top as shown in this Figure. Other in-situ installations similar to Figure 13 are shown in Figure 24.

The membranes according to Figures 12, 13 and 24 can be installed in place by known mechanical methods.

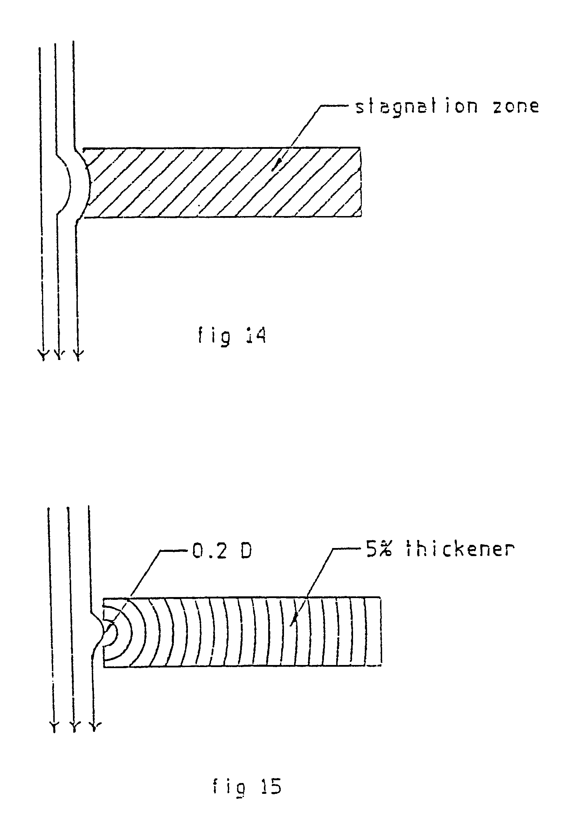

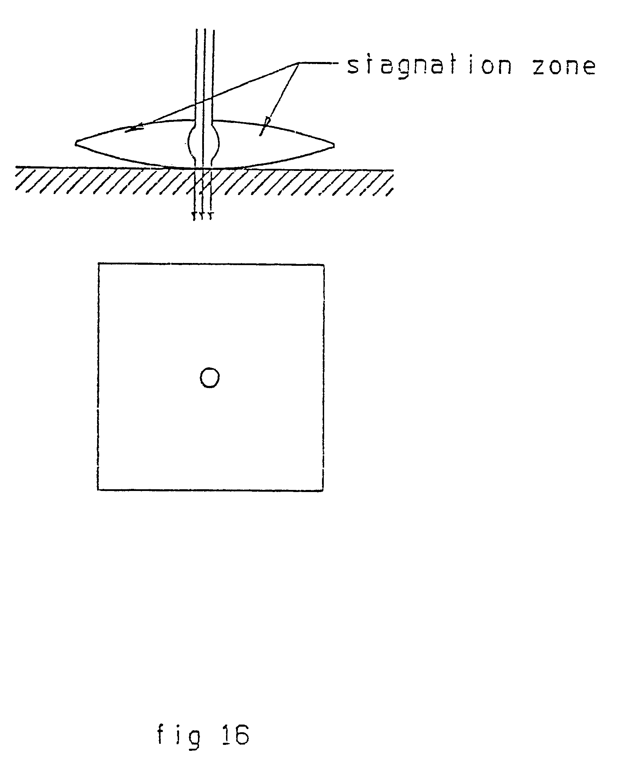

Figures 14 and 15 illustrate cylinders with one end closed.In Figure 15 the opening is narrower than the full cross-section of the cylinder. In both cases, most of the volume enclosed by the cylinder is a volume of stagnation, as far as the outside passing water flow is concerned. In Figure 14, the advance of the wetting front with time are vertical straight lines and the symmetry of wetting is linear.The diffusion of the solutes following the wetting will also be linear. This shape is excluded from the present invention since there is no narrowing of the opening compared to the cross-section. It may be also applied, in some cases with less success, when the enclosure is as shown in Figure 15. The front lines of wetting in Figure 15 are first approximately spherical in shape and as they move away from the reduced opening they turn more and more to be straight as in a linear case.

Figure 16 shows a rectangular bag with a small thickness and an opening near the center of the rectangle. In this Figure appears a cross-section view of the bag. It shows the part through which stream lines can pass to form a through flow of leaching, had not the hydraulic conductivity been limited. Still much of the volume within the enclosure is a stagnation volume in the classic meaning, i.e. in terms of possible leaching of solubles. However, the inclusion of a thickener in the enclosed mixer excludes most of such possible leaching.The advancement of the wetting front into the dry mixture on its initial wetting has initially spheroidal shapes as shown in the cross-section (Figure 16a). The two wetting fronts from the upper and the lower openings meet more or less in the middle (the horizontal line in Fig. 16 a). Thethorizontal line, actually represents a plane of stagnation between the two wetting fronts.It divides the bag into two enclosures within one package, an upper enclosuree with one opening and a lower one with another opening. Soon, the symmetry turns into a more or less cylindrical one at least for a while (vertical view in Figure 16 b).

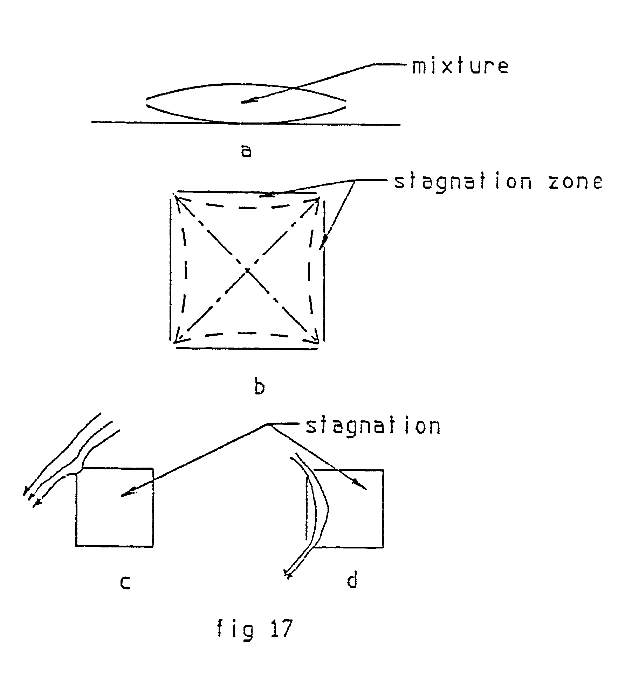

Figures 17a,b,c,d, depict a rectangular bag with openings placed at one or more corners of the rectangle. The stagnation volumes against leaching from the outside, is largest with one opening as in Figure 17 c and is smallest with openings in all four corners. The stagnation zones for wetting fronts are different and are more or less orthogonal to those of the leaching as the wetting fronts are more or less orthogonal to the stream lines.

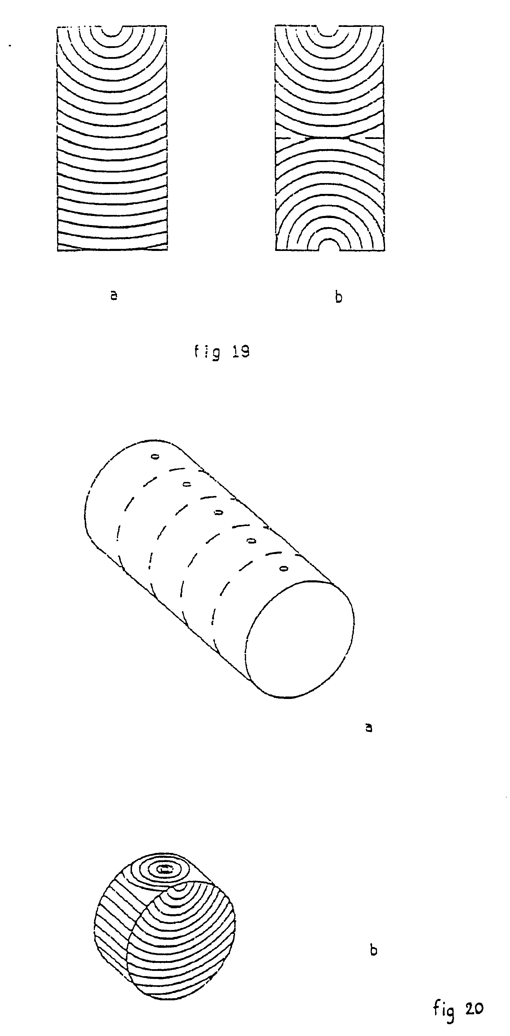

The movements of the wetting fronts are illustrated in Figures 19a and b for a cylinder and 18a, b and c for a rectangular bag. A cylinder with two narrowed openings as in Figure 19b has really two enclosures : a top one and a bottom one. Each enclosure has one opening which is narrower than the full cross-section. The wetting fronts and the wetting process start as having a more or less spheroidal symmetry and it gradually changes into a linear one. The stagnation zone in accordance with the wetting process is the middle surface across the cylinder shown in Figure 19b as a horizontal line in the middle.

The wetting front lines in a rectangular package have more or less cylindrical symmetries in each individual enclosure which is delineated by one opening in the outside envelope and by stagnation lines of the wetting.

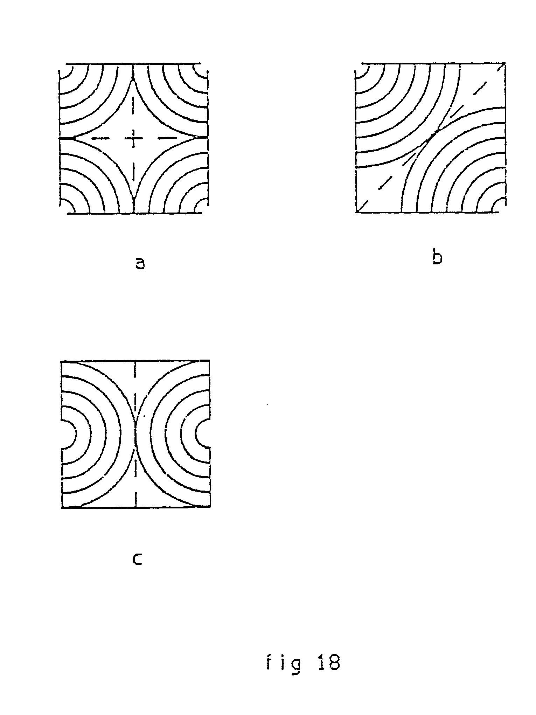

In Figure 18a there are four openings in four enclosures The stagnation lines between them are a vertical and a horizontal line in the middle of the rectangle. With two enclosures and with two openings in the opposite corners, the stagnation line is the diagonal. In both rectangles of Figures 18a and b the central angles of the cylinders is 90 degrees. Figure 18c depicts a rectangle with openings on the edges.The symmetry of wetting is still cylindrical but the central angle is 180 degrees and the two enclosures in the package are separated by a stagnation line which is vertical.Notably,in Figure 16b the distance from farthest point to the opening, which determines the overall time of wetting and influences also the time for diffusion, is one half of the rectangles diagonal.Exactly the same distance is found in Figure 18a with four openings in four corners and in Figure 18c with two openings in two edges. The longest distance in Figure 18 b is the edge of the rectangle.The longest wetting distance is the full diagonal with one hole in the corner.This illustrates the design possibilities in accordance with the present invention.

figures 20a and b illustrate still another embodiment where there are many openings installed on the side of a cylindrical package.The stagnation surfaces between individual enclosures, where the wetting fronts of neighbouring openings meet,are planes that cut shallow cylindrical slices out of the long cylinder. The wetting symmetry as well as the following diffusion is more or less spheroidal at the beginning and turns into a more or less cylindrical one in later stages. This is illustrated by the axonometric view in Figure 20b.

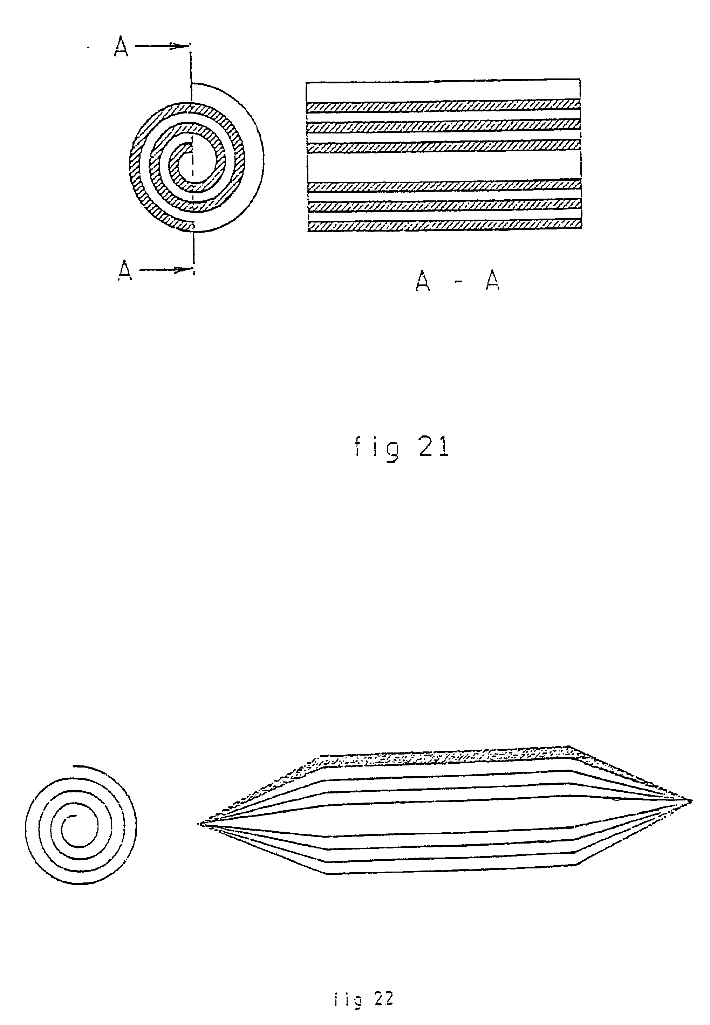

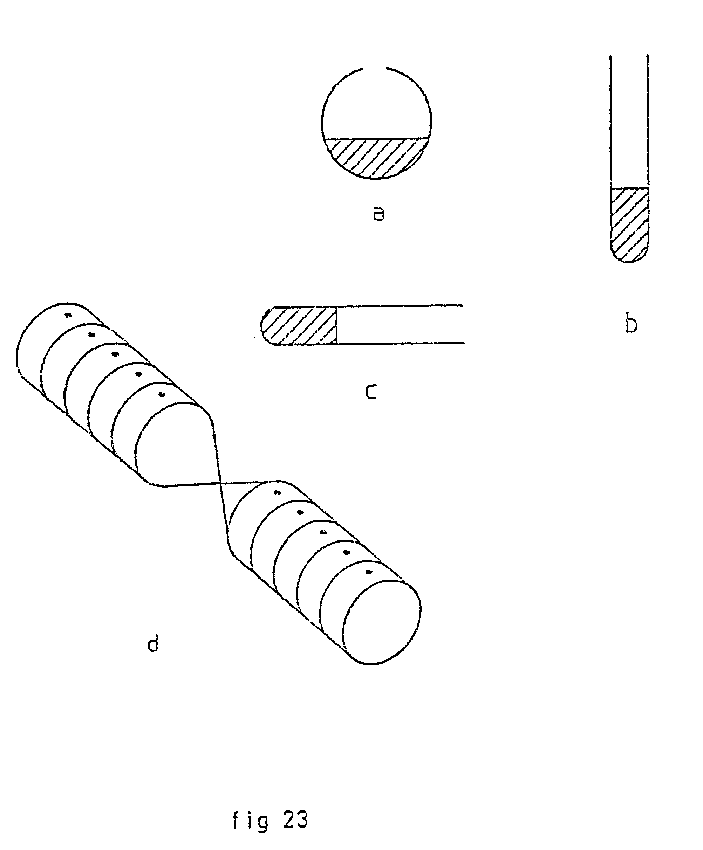

In Figures 21a and b, as well as in Figures 22a and b, there are illustrated other embodiments of a package in accordance with the present invention. In Figures 22a and b, a mixture of the right composition is placed in a spread layer on top of an impermeable membrane and rolled onto itself into a folded or rolled shape with the margins sealed. The path of the wetting becomes materially a spiral one, in a shape commonly named "strudel" in the field of cakes and pastry. Another way to obtain this shape is to fill up an elongated rectangular bag with a relatively thin layer of the mixture and roll it onto itself leaving the opening of the bag unsealed on the narrow side of the bag. The opening in both variations of the same configuration is narrowed either in the small dimension or in the width or in both, to be of an area less than one fifth of the cross-section of the rolled layer of mixed material in the strudel (mot shown in the drawings). In this manner,it is avoided the initial burst of solubles release typical to the linear, so called Fickian flow regime.

The in-situ production of the enclosure and the placement of the beneficient mixture inside the enclosure, is an alternative to the use of prefabricated enclosures, which already contains the mixture.Figure 23 describes different cross-sections for a continuous folded strip of an impermeable membrane that forms an elongated enclosure.

Figure 23a shows a cross-section that has already been shown in Figure 13. Figures 23b and c show a horizontal and vertical folds. Figure 23d shows an enclosure made of two impermeable strips, laid one on top of the other, and the mixture placed between them. A prefabricated sleeve can also be used and it is released off a cartridge where it is folded on a short pipe.The required mixture is passed through the pipe while the sleeve is released (like sausages filling).

All forms of strips can be placed inside the ground by a known art of plows that are intended to place membranes underground as well as underground drainage pipes and cables in one pass.

The effective length of the enclosure in accordance with Figures 13 and 23 may be shortened by discontinuities.One of several possibilities to discontinue the length of the enclosure is simply to turn the impermeable membrane strip periodically as in Figure 23d and form a twist. The spool that unrolls the envelope strip into the ground turns periodically around itself 180°. Other methods of discontinuing the package in-situ, is by lifting, by squeezing and stopping periodically the out pour of the beneficient mixture into it. Figure 23d also illustrates the possibility to subdivide each package into individual shorter enclosures by drilling a multiple of holes along the otherwise impermeable envelope.

In the assortment of prefabricated enclosures there is another preferred embodiment for the use in plant pots above the ground, using a container with an opening in one edge which is possibly protruding in a form of a spout which is pressed into the soil.The inner mixture starts to be wet and the soluble material starts to be released. According to a preferred embodiment, the walls of the enclosure are transparent or translucent so that the change in the content can be visualized. An illustration of this embodiment is shown in Figure 24.

Still another example of the enclosure, is a granule made by a proper mixture with the binding material not resulted by wetting or thoroughly dried and a consequent coating by one of the methods known in the art. The coating may be carried out, for example by spraying, dipping or rolling with a polymer, wax or other known compound. A hole is eventually punched, drilled or burned in the envelope by any one of the known methods.

In accordance with the present invention, the device can be made by filling up preformed containers or by coating preformed granules or by a simultaneous production. The material of the envelope can be of a pliable inpermeable membrane, by any number of rigid or semi-rigid materials in the form of bottles,corked test tubes or special cells around a plant pot with the holes directed inward. Alternatively, the devices can be made by coating preformed granules of the ready mixture.

The prefabricated containers can be in the form of long sleeves and the filling method like in the production of sausages. The filling of bags can be like it is common in known products of a granular nature which are of various shapes and techniques. Small spheroidal devices can be produced by granulation, pelletizing, sintering or prilling, all being well known in the art.

The openings envelope can be done by various methods. In the experimental stage, mechanical drills were used for making holes in semi-rigid test tubes. Laser beams can be used to punch holes in granules which are passed on a conveyer belt. The holes may be made by etching which is activated optically by methods known in the art. In larger enclosures, holes may be marked in the walls to enable opening by tearing or puncturing before use.

In some particular cases, it may be desirable to have a second coating after the hole has been made. This coating can be made to be water soluble so that it protects the content of the envelope as long as it is not placed in a wet environment.

A plurality of prefabricated enclosures filled with the beneficient mixture can be tied into a string, either in the process of production or as a separate process. It is intended for special raw crops and a provision for an accurate distribution of the material in an exact placement. This is an alternative for the placement of individual parcels at exacting sites, which require a special machine.

One may also conceive to make the impermeable envelope from a degradable material that will have a limited life-time in the soil.This is in accordance with other methods which are outside the present invention.

## Claims

1. A device for releasing fertilizer to a humid soil in a controlled and prolonged way, which comprises an enclosure containing a dry mixture of materials with at least one soluble component to be released in said humid soil, at least one water absorbing finely dispersed component serving as a thickener capable to reduce the hydraulic conductivity to water to less than one millimeter per day, the soluble chemicals being adequately selected in order to leave a significant portion undissolved upon the initial wetting of said mixture, being characterized that :

(a) said mixture is in part enclosed by a water impermeable membrane and in part by stagnation zones which act as if they were impermeable, thus preventing leaching out of the soluble component ;

(b) the combination of said impermeable membrane and stagnation zones generating said enclosure with one opening which allows water flow into the enclosure, and

(c) the area of said opening not exceeding one fifth of the cross-section of the enclosure.

2. The device according to Claim 1, in which the initial wetting of the contained materials near the opening has a symmetry of a spherical sector.

3. The device according to Claim 2, wherein the ratio of the opening area to the cross-section area of the spherical sector is between 1 :10 to 1 :1000.

4. The device according to Claim 1, in which the initial wetting of the materials near the opening has a symmetry of a cylindrical sector.

5. The device according to Claim 4, wherein the ratio of the opening are a to the larger cross-section of the cylindrical sector is between 1 :20 to 1 :100.

6. The device according to anyone of claims 1 to 5, possessing at least one package-like configuration with a plurality of openings, said package being divided to individual enclosures which are delimited by said impermeable membranes and stagnation zones, wherein each enclosure possesses one opening.

7. The device according to Claim 6, wherein the number of the enclosures in said packaqe does not exceed 10.

8. The device according to claim 6 or 7 wherein a plurality of packages are connected to each other.

9. The device according to anyone of claims 1 to 8, wherein the enclosure is made of a material which is transparent or translucent.

10. The device according to Claim 9, wherein the material in said enclosure changes colour upon the soluble portion present therein is gradually depleted.

11. The device according to anyone of claims 1 to 9, said device being prefabricated.

12. The device according to Claim 11, wherein the opening of the enclosure in said prefabricated device is put in contact with the humid soil.

13. The device according to anyone of claims 1 to 12, wherein the water impermeable enclosure is made by coating a prefabricated rigid body.

14. The device according to Claim 13, wherein the beneficient mixture of materials is placed into the prefabricated package.

15. The device according to anyone of claims 1 to 14, wherein the fertilizer to be released from the mixture of materials is nitrogen constituent selected from $NH_4^+$' $NO_3^-$, urea and mixtures thereof.

16. The device according to Claim 15, wherein the ammonium nitrogen constitutes above 10% of the total nitrogen.

17. The device according to anyone of claims 1 to 16, wherein the soluble component to be released comprises at least one inorganic nutrient.

18. The device according to Claim 17, wherein said inorganic nutrient is selected from potassium, phosphorus and mixtures thereof.

19. A method for producing the device according to any one of claims 1 to 13, by extruding the mixture of materials into a prefabricated water impermeable membrane in the form of a sleeve.

20. A method for producing the device according to anyone of claims 1 to 13, by filling up a bag made from a pliable impermeable thin film with the mixture of materials and sealing said bag.

21. A method for producing the device according to anyone of claims 1 to 13, by spreading the mixture of materials on a thin pliable film and rolling it to a required length the margins of said film being subsequently sealed.

22. A method for producing the device according to anyone of claims 1 to 13, wherein said enclosure is made by filling up a relatively rigid tube with the mixture of materials and plugging the filling end.

23. A method for producing at-site the device according to Claims 1 to 13, by forming said enclosure and inserting therein the mixture of materials.

15

24. A method according to Claim 23, wherein said enclosure is obtained from two strips of pliable impermeable film, the first strip being laid on top of which the mixture of materials is placed and covered by the second strip, the margins of the two strips forming two narrow openings.

25. A method according to Claim 24, wherein said enclosure is made from a prefabricated long sleeve made of an impermeable pliable film, in which the mixture of materials is placed at the same time that it is released into the ground.

Figure 1

Figure 2

EP 0 438 356 A1

Figure 3

Figure 4

18

Figure 5

Figure 6

Figure 7

Figure 8

Figure 9a

Figure 9b

Figure 10

Figure 11

soil surface

stagnation zone

membrane

fertilizers mixture

fig. 12

fig. 13

stagnation

stagnation zone

fig 14

0.2 D                5% thickener

fig 15

stagnation zone

fig 16

fig 17

a

b

c

fig 18

a b

fig 19

a

b

fig 20

fig 21

fig 22

a

b

c

d

fig 23

dry mixture

welling front

fig 24

## EUROPEAN SEARCH REPORT

European Patent Office

Application Number

EP 91 40 0101

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 356 755 (AGLUKON SPEZIALDUNGER, GmbH) * Claims 1,2,5,8; column 1, line 53 - column 2, line 8; column 2, lines 17-49; column 3, lines 2-3 * | 1-5,11-18 | C 05 G 5/00 A 01 C 21/00 |
| A | US-A-4 627 191 (E.W. BERGERE) * Claim 1; column 1, lines 59-65; column 4, lines 6-9 * | 19,20 | |
| A | US-A-2 315 949 (A.C. FISCHER) * Claim 1; column 1, lines 15-19,31-36 * | 21 | |
| A | US-A-2 145 934 (R.B. KINGMAN) * Claim 1 * | 22 | |

TECHNICAL FIELDS SEARCHED (Int. Cl.5)

C 05 G
A 01 C

The present search report has been drawn up for all claims

| Place of search | Date of completion of the search | Examiner |
|---|---|---|
| THE HAGUE | 19-03-1991 | RODRIGUEZ FONTAO M-B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)